(19) **Europäisches Patentamt**
**European Patent Office**
**Office européen des brevets**

(11) **EP 3 319 410 B1**

(12) **EUROPEAN PATENT SPECIFICATION**

(45) Date of publication and mention
of the grant of the patent:
**19.02.2020 Bulletin 2020/08**

(51) Int Cl.:
***A01B 43/00*** *(2006.01)*  ***F15B 3/00*** *(2006.01)*

(21) Application number: **16823935.8**

(86) International application number:
**PCT/FI2016/000017**

(22) Date of filing: **05.07.2016**

(87) International publication number:
**WO 2017/009520 (19.01.2017 Gazette 2017/03)**

(54) **HYDRAULIC SOLUTIONS ON A WORK MACHINE**

HYDRAULISCHE LÖSUNGEN BEI EINER ARBEITSMASCHINE

SOLUTIONS HYDRAULIQUES SUR UNE MACHINE DE TRAVAIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.07.2015 FI 20150213**

(43) Date of publication of application:
**16.05.2018 Bulletin 2018/20**

(73) Proprietor: **Oy El-Ho Ab**
**68910 Bennäs (FI)**

(72) Inventors:
• **LÖFBACKA, Johan**
**68930 Purmo (FI)**
• **WEST, Filip**
**68600 Jakobstad (FI)**
• **LÖFVIK, Joakim**
**68910 Bennäs (FI)**

(74) Representative: **Kolster Oy Ab**
**(Salmisaarenaukio 1)**
**P.O. Box 204**
**00181 Helsinki (FI)**

(56) References cited:
**WO-A1-2011/078846**   **WO-A1-2011/078846**
**US-A- 5 430 999**      **US-A- 5 511 368**
**US-A- 5 511 368**      **US-B1- 6 922 992**

**Description**

This innovation is related to a stone picker connected to a base machine, where at least part of the weight of the work machine during work is transmitted to a tractor or base machine and where the work machine show as well hydraulic motors and/ or hydraulic cylinders.

As the cultivated area pro farm has heavily increased during the last decades and new areas have been cultivated, the need to collect stones from arable fields has strongly increased.

A lot of different models of stone pickers have been presented in the patent literature as far as from early 1900 century, the oldest ones American or Canadian powered by horses, later powered by tractors and even self-propelled models.

From the simple (frequently British) tractor carried solutions presented in the patent literature in the late -50es and early -60es the Japanese started with their trailed solutions in the -70es. US and CA have also during this hole period a lot of patent applications. These were frequently intended to collect smaller stones in swaths, or different models of loading buckets to collect stones (from the swaths), or to take up single big stones, for example when new land was taken in cultivation.

In the USSR a big numbers of patent applications and utility models have been presented from early -80es to the Soviet dissolution

As a forerunner to the solutions, those also today are seen as modern, one can rightly consider the publication FR2595185 from March 1986, where Frenchman Maurice Tanguy presents a stone picker pulled by a tractor and equipped with a lifting rotor, that co-operate with a siew, who's frontend penetrate below the ground surface, collects stones and transport them to a tilting container positioned at the rear end.

The throwing rotor of Tanguy is mounted in a separate frame, movable in relation to the siew to enable also bigger stones to pass without blocking the rotor.

Here is the basic central solution presented, that is most common in Europe even today, particularly if completed with the solution presented in the patent publication CS263662 by the Czech Miroslav Svoboda and Co..

Here is the stone picker combined with the already known aligned stone rakes, one each side in front of the lifting rotor. In this manner, it was possible to increase the working width of the machine and to save one separate work pass, raking the stones in a swath.

One can quickly convince oneself, that these in the mid 1980es presented solutions still are dominating the market by checking on the internet the offers of today-, and the producers of stone pickers.

As an example we can from the home page of PEL-Tuote (*http://pel-tuote.fi/sv/esitteet/*) see how the Kivi-Pekka stone picker is build using the teachings from the French and the Czech solutions from 1986.

As well it is possible to find a fairly similar solution on the Kongskilde home page *( http://www.kongskilde.com/fi/fi-FI/Agriculture/Soil/Stone%20Collecting/Stone%20Collecting/JUKO%20STONEBEAR)*

Characteristically bout the raking rotors and the lifting rotor are mechanically driven from the tractor PTO by use of drive shafts, gearboxes and V-belts, showing as well benefits as disadvantages.

The benefit with the mechanical transmission is that it is possible by use of quite simple known components to transmit enough power and torque by normal load without disturbance.

The load on a stone picker is however all time strongly pulsating as a stone rake collects a flow of small and middle size stones to the lifting rotor. The load shows additionally sharp load peaks as single big stones enter the machine. If the stones are oversize or unsuitable formed and enter the machine in "wrong edge", blockage will occur.

Of course the mechanical transmission in known stone pickers is equipped with overload protections, but really these are mostly their Achilles' heel. Known types of overload protection used are multi disk friction clutches of standard type, or as in the above mentioned Kongskilde and PEL-Tuote machines V-belt transmissions between the gearbox and the rotors.

The all-time pulsating load creates heating of the overload protections and as it is very difficult to equip these rotating components with an effective cooling, they easily are overheated and get unusable until their central components are replaced.

The drive torque for V-belts used as overload protection is extremely sensitive to dirt and moisture on the belts. If they got vet ore dirty they first have to be cleaned and dried and their pre-tension has to be checked and adjusted before the work can continue after an overload. That the cleaning and the adjusting of the V-belts really is difficult can clearly be understood thereby that for Kongskilde Kivikarhu, the instructions for adjusting and cleaning the V-belts go over three pages in the instruction manual and include advise to grind the grooves in the pulleys when the machine is standing and to clean and dry the belts before the interrupted work can continue.

If the drive do not manage to disengage the PTO of the tractor immediately in time when overload occurs, these mechanical overload protections are very quickly overheated. The friction discs of the multidisc overload clutches get glazed and has to be replaced. The V-belts bums and also they has to be replaced, adjusted and be running in with due care during the run in period and thereafter readjusted checking the pre-tension rate during the run in time. (if doubt, see the instruction manual of Kivikarhu). All these additional work reduce the efficiency, gives expensive downtimes in the work and increase the risks concerning work safety.

Therefore the Canadian producer Degelman for example, do produce stone pickers alternatively equipped with mechanical- or hydraulic transmissions. Check the presentation of their model Signature 7200 at:

*http://www.dege/man.com/products/agricultural_equipment/rockpickers_rakes/signature/i ndex.php*

As seen from this presentation, the benefit with the mechanical transmission is that it can transmit high torques and the machine is therefore able to collect also big stones.

The easy reverse possibility for the collecting rotor, offered by the hydraulic transmission is a big advantage by blockage.

Additionally the pressure relief valve of the hydraulic transmission gives a very reliable overload protection. The disadvantage is, that the hydraulic capacity of most of the agricultural tractors normally available for this work, is not with conventional solutions big enough to ensure the separate working units enough power to collect also big stones.

To overcome these disadvantages with the known mechanical and hydraulic solutions for stone pickers, a stone picker according to claim 1 has been developed.

The most important benefits with these is, that effective and almost maintenance free overload protections are available for each separate work unit, and that the rotation speed of the separate driven units remain at required level also if the load between themselves variate.

Further a major advantage is that the load between the different driven units automatically is distributed to ensure that the heaviest loaded unit all time has access to the spare power the less loaded units does not momently use within the scope of the given maximal allowed drive power.

This ensure, that the working pressure in the system, and the hydraulic power taken from the tractor or the base machine all time is hold on the lowest possible level, as the system pressure is not desired by the most loaded work unit but by the total load.

Another big benefit is also that the cooling of the overload protections, in this case the pressure relief valves for the separate rotors is very effective as new oil all time flow through and cool them at possible stand stills for the single work unit, or at a total stop of the hole system.

The overload limit is neither sensitive for external dirt and does not need to be readjusted after an overload as for the above described traditional solutions.

Furthermore it is easy to reverse the rotors at minor blockages. Downtime at work therefor almost disappears and the efficiency of the machine can all time be optimally used.

Below an advantageous embodiment of the invention is described with use of the following drawings.

Fig 1. Shows a top view of a stone picker, using the hydraulic solutions of the invention.
Fig 2. Shows the same machine in a side view.
Fig 3. Shows the same machine in a rear view.
Fig 4. Shows a typical hydraulic scheme for the hydraulic solutions according to the present invention.

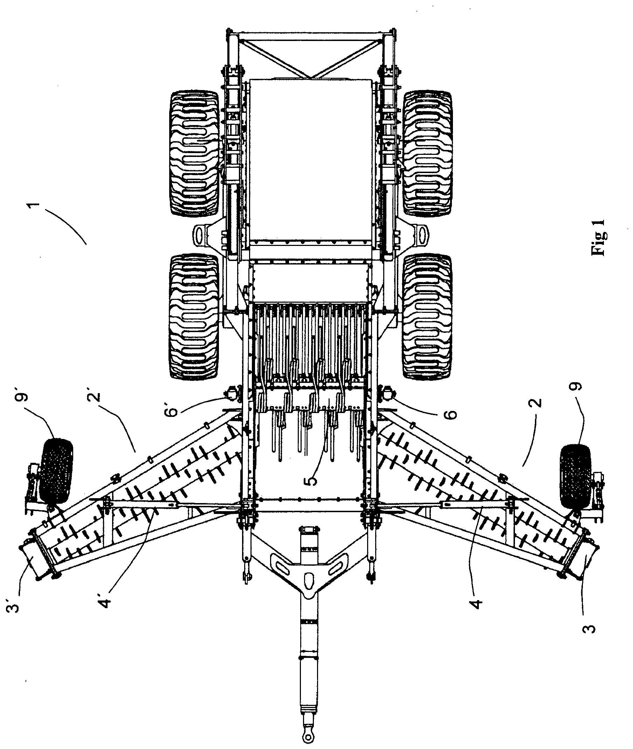

Fig 1. Shows a top view of the stone picker, where for the understanding of the invention the most essential components are numbered. Left and right rake units 2 and 2', hydraulic motor for left and right rake 3 and 3', lift cylinders for left and right rake units 4 and 4', lift rotor 5, left and right hydraulic motor for the lift rotor 6 and 6'.

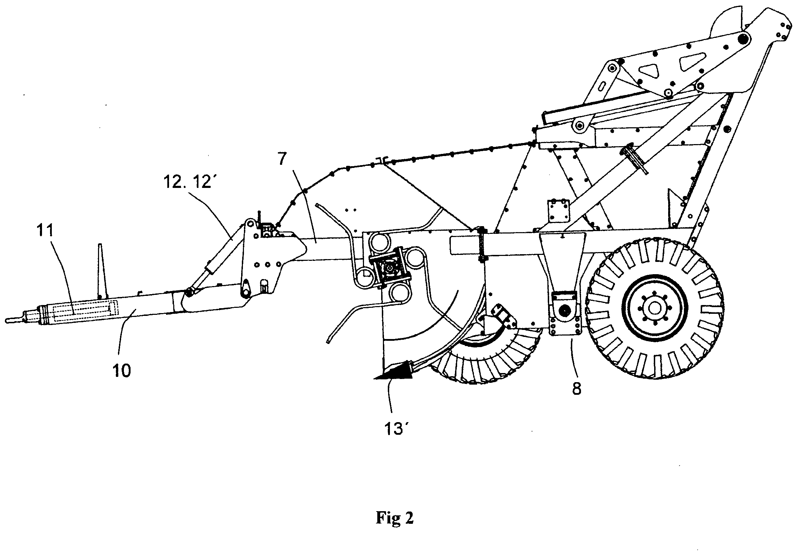

Fig 2. Shows a side view of the stone picker, where for the understanding of the invention the most essential components are numbered. Carrier frame 7, with tandem unit 8, support wheels for the stone rakes 9, drawbar 10, drawbar pull cylinder 11, drawbar height adjustment cylinder 12 and the slew heads 13'.

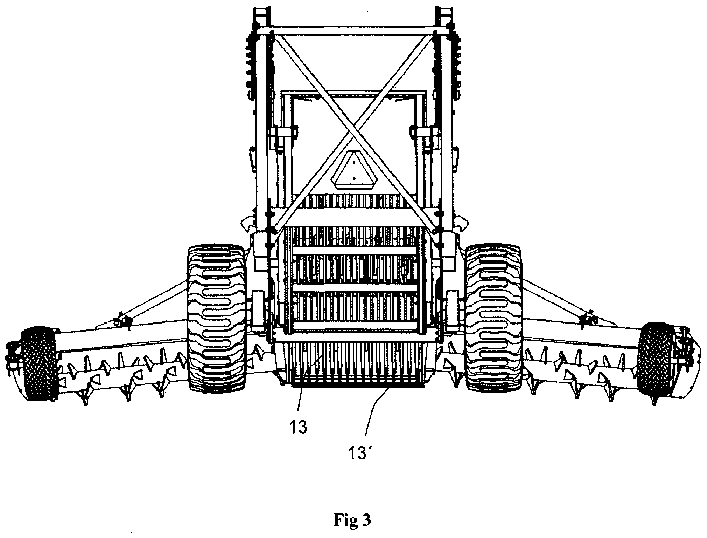

Fig 3. Shows a rear view of the stone picker, where for the understanding of the invention the most essential components are numbered. Siew under the lift rotor 13.

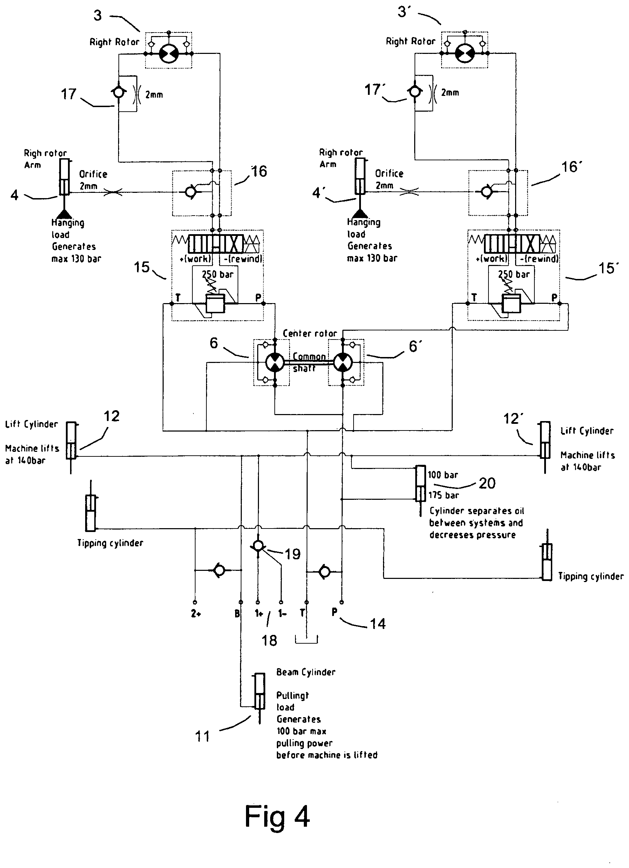

Fig 4 shows the hydraulic scheme of the stone picker where for the understanding of the invention the most essential components are numbered.

The rotors drive circuit: The tractor external hydraulic connection pressure 14, cylinder 20, left and right hydraulic motor 6 and 6' for the lifting rotor, control valves 15 and 15' for left and right rake units, pivot operated check valves 16 and 16'for the left and right lift cylinders, lift cylinders for left and right rake units 4 and 4', non-return valves with restricted bypass left and right 17 and 17', hydraulic motors for left and right rake units 3 and 3'.

Height adjustment circuit: The tractor external double acting connection 18, pivot operated check valve 19, height adjustment cylinders left and right 12 and 12', cylinder 20 and the pull cylinder 11 of the drawbar.

Note, for the hydraulic connection to the tractor is only one double acting and one single acting connection + free return used. No from tractor electrically or cable operated hydraulic valves are needed.

The function of the hydraulic solutions according the invention is as follow:

The not shown mechanical transport security lock for the rakes are opened. The tractor external hydraulic 14 is activated and the lift rotor 5 starts. As the operating valves 15 and 15' for the rake units are activated in + position the rake units are lowered since the return pressure from the hydraulic motors 3 and 3' of the rake units are big enough to open the check valves 16 and 16'.

Bout of the rake units keeps now the same speed as they ar driven by the return oil from the equal sized hydraulic motors 6 and 6' which are synchronized with each other through the lift rotor shaft 5 and therefore distribute the oil from the reactor evenly to bout of the rake units independent of their load.

The required working depth is set by the tractor external hydraulic connection 18. The pivot operated check valve 19 prohibit during work the oil from leaking out of the height adjusting cylinders 12 and 12' back to the tractor.

When the machine is operating normally, the pressure in the height adjustment cylinders 12 is equal high as the pressure on the piston rod side in the pull cylinder 11 of the drawbar.

If the machine tends to sink to deep, the pulling resistance will increase and the pressure in the pull cylinder 11 of the drawbar will increase. Then oil is led from this cylinder 11 to the high adjustment cylinders 12 and the working depth will decrease.

Here we have a kind of an automatic depth control based on the pulling force, it means depending on how deep the siew edges 13' penetrate in the soil and how hard the soil is.

How deep the siew edges work desire also how deep the lifting rotor 5 and also how deep towards the raking rotors directed parts of the rakes do work. At increased working deep and or at heavier soil or by increased stone presence or by increased speed, the rotation resistance for all three rotors does increase, most of course for the lifting rotor 5 but also for the rake unit rotors 2.

From the hydraulic scheme we can see that the pistonrod side of the cylinder 20 is in connection with the height adjustment cylinders 12. The cylinder 20 thus separate the oil in the rotation drive and in the height adjustment circuits from each other, but keeps the pressure relation between the pressure in these circuits on the level given by the area relation between the bout chambers of the cylinder 20 gives.

This mean that the higher rotation resistance the rotors get, the more oil will be pressed out of the cylinder 20 to the height adjustment cylinders 12 and opposite, the lower the rotation resistance for the rotors is, the more oil is let out from the height adjustment cylinders 12 to the cylinder 20 and the working depth of the machine will increase.

Therefore we get a load adapting depth regulation that not only take in account the pulling force, but the depth regulation is a function of all the parameters: working depth, soil stiffness, stone presence, working speed and the rotation speed of the rotors. If the depth control is marked by Z, this regulation can be written as a function

$$Z = \int \left( \Delta_{\text{working depth}}, \Delta_{\text{soil stiffness}}, \Delta_{\text{stone presence}}, \Delta_{\text{working speed}}, \Delta_{\text{rotation speed}} \right)$$

The area ratio between the piston- and piston rod sides of the cylinder 20 determinate, to what amount the of the rotation resistance depended parameters influence on the depth control, in relation to how those parameter, who only are related to the pulling force in the drawbar.

Thus it can oft be a benefit to connect a second cylinder with another area ratio in parallel th the cylinder 20 to get the possibility to during work adjust what influence (how heavily) the different parameters will have on the load depending depth control Z.

When we look at the rotor drive we did already notice that bout of the hydraulic motors of the lifting rotor do work also as flow dividers and do synchronize the speed between the rotors.

When we look at the dynamic pressure drop over the hydraulic motors we can for example look at a situation where the load on the left rake unit 2 increase while the load on the right hand rake unit 2' remain constant. The pressure drop over the hydraulic motor 3 of the left hand rake unit increase. This results in a decreasing of the pressure drop over the hydraulic motor 6 of the lifting rotor. The two hydraulic motors 6 and 6' do therefore give different torque on the shaft of the lifting rotor 5, in extreme case so that the left hydraulic motor instead of giving part of its effect to the lifting rotor instead is driven by this and then will act as a pump and can increase the working pressure of the hydraulic motor 3 of the left rake unit to the maximum pressure limit of the control valve 15, thus much higher than the system pressure of the tractor external hydraulic.

The connection of the hydraulic motors according to the present innovation, results in a power distribution between the hydraulic motors of the three rotors and supply the maximum power to that hydraulic motor that instantaneous has the highest external load. Here is not only the hydraulically supplied. power used, but also the kinetic energy stored especially in the heavy lifting rotor 4 with large diameter, but also the kinetic energy of the right had rake rotor is used to help the hydraulic motor of the left hand rake rotor over the load peak and vice versa.

Is the load of the hydraulic motor of the left hand rake rotor all too big, the pressure relief valve of the control valve 15 at 250 bar and oil can the free bypass the motor 3 to tank. Thus at this overload also heavy heating will occur, an effective cooling of the overload protection is present by the continuous oil flow through the valve and the relief pressure of the valve is kept on an even level without need of readjustment, cleaning operations or changing of parts as usually is the case by the traditional over load protections that up to now have been dominating on the stone pickers on the market.

If the rake rotor tends to stop because of tree roots or branches winding around it, or because of a suitably shaped stone that itch in between its throw fingers and the frame, with a hydraulic solution according the present innovation it is only needed to reverse its control valve 15. The oil will then be directed to the lift cylinder 4 of the rake unit and release the unit from the ground. Simultaneous part of the oil will flow through the restricted bypass 17 of the relief valve to slowly reverse the rake rotor to release the blockage and the work can continue with a minimum of standstill and with maximum of safety for the driver.

The fact that the load on the rotor first is automatically reduced by the oil supplied to the lit cylinder will of course help to reverse the rotor and release the blockage.

As the above-described examples shows, the hydraulic solution of the present innovation has many advantages compared to the state of the art hydraulic solutions in stone pickers. The work machine does of course not be a stone picker, but can be any work machine getting its hydraulic power supply from a base machine and who's own weight at least partly is unloaded by this. The number of driven rotors is neither limited to two, but can be any number.

The area of use is neither limited to a within the agriculture used working machine, but can be for example a machine used within road or landscape construction and many variations thereof are possible within the scope of the patent claims below.

The above described hydraulic solutions are to be implemented on a work machine 1 such as a stone picker, for example, connected to an agricultural tractor or equivalent. Such a work machine shows several hydraulic driven work units 2, 2', 5 and hydraulic motors 3, 3', 6, 6'. Hereby at least two hydraulic motors 6, 6' are connected in parallel and drive the same driven work unit (5). The other hydraulic motors 3, 3' are connected in serial with the first mentioned OHCS. Hereby the in parallel connected also can be supplied with unused power reserve from the less loaded working units 2, 2', through the shafts of the motors 6, 6', in a manner where the receiving motor then also works as a pump, whereby the output pressure from this will be higher than the incoming pressure. This makes it possible for the pressure drop over the hydraulic motor of the most congested work unit to increase markedly over the system pressure of the hydraulic power source that drives the work machine.

In an aspect of such a work machine at least three of the hydraulic motors mainly keep their specific rotation speeds also when the load distribution between the driven work units varies arbitrarily.

In an aspect of the hydraulic solutions the hydraulic power distribution always favors the most congested work unit.

In a further aspect of the hydraulic solutions the hydraulic motors 6, 6' that drive the same work unit 5 are connected in parallel either on the pressure- or the return side.

In a further aspect of the hydraulic solutions the rotors 2, 2', 5 of the hydraulic driven working units can be reversed to free a possible blockage.

### Referens number list

| Ref | Name / description |
| --- | --- |
| 1 | Stone picker |
| 2 | Left rake unit |
| 2' | Right rake unit |
| 3 | Hydraulik motor of left rake unit |
| 3' | Hydraulic motor of right rake unit |
| 4 | Lift cylinder of left rake unit |
| 4' | Lift cylinder of right rake unit |
| 5 | Lifting rotor |
| 6 | Left hydraulic motor of lifting rotor |
| 6' | Right hydraulic motor of lifting rotor |
| 7 | Main frame |
| 8 | Tandem unit |
| 9 | Support wheels for the rake units |
| 10 | Drawbar |
| 11 | Pull cylinder of the drawbar |
| 12 | Height adjusting cylinder left |
| 12' | Height adjusting cylinder right |
| 13 | Slew beneath the lifting rotor |

(continued)

| Ref | Name / description |
| --- | --- |
| 13' | Sieve edges |
| 14 | Tractor external hydraulic connection pressure |
| 15 | Control valve of left rake unit |
| 15' | Control valve of right rake unit |
| 16 | Pivot operated check valve of left lift cylinder |
| 16' | Pivot operated check valve of righet lift cylinder |
| 17 | Non return valve with restricted bypass left |
| 17' | Non return valve with restricted bypass right |
| 18 | Tractor external double acting hydraulic connection |
| 19 | Pivot operated check valve |
| 20 | Cylinder |
| 21 | |
| 22 | |
| 23 | |
| 24 | |
| 25 | |
| 26 | |

**Claims**

1. Stone picker (1) connected to an agricultural tractor or equivalent,
   the stone picker comprising several hydraulic driven work units (2, 2', 5): a left rake unit (2), a right rake unit (2") and lift rotor (5), and
   hydraulic motors (3, 3', 6, 6') driving said work units,
   **characterized in that**
   the hydraulic motors (6, 6') are arranged to drive the lifting rotor (5), and
   the hydraulic motors (3, 3') are arranged to drive the rake units (2, 2'), and
   each of the hydraulic motors (3, 3') is connected in series with a hydraulic motor (6, 6') of the lifting rotor (5),
   said hydraulic motors of the lifting rotor also being arranged to act as pumps, whereby
   kinetic energy stored in the lifting rotor together with surplus hydraulic power from the motors (6, 6') of the lifting rotor (5), is arranged to be suppliable to the motor (3 or 3') of a instantaneous most loaded rake unit (2, 2') to assist the motor (3, 3') thereof at load fluctuations, and thereby being arranged to minimize a total hydraulic power demand of the stone picker.

2. Stone picker (1) according to the preceding claim, **characterized in that** at least three of the hydraulic motors (3, 3', 6, 6') are arranged to mainly keep their specific rotation speeds also when the load distribution between the driven work units (2, 2', 5) varies arbitrarily.

3. Stone picker (1) according to any one of the preceding claims, **characterized in that** a power distribution between the hydraulic motors (3, 3', 6, 6') is arranged such, that the maximum power is supplied to that hydraulic motor that instantaneous has the highest external load.

4. Stone picker (1) according to any one of the preceding claims, **characterized in that** the hydraulic motors (6, 6') that drive the same work unit (5) are connected in parallel either on the pressure- or the return side.

5. Stone picker (1) according to any one of the preceding claims, **characterized in that** rotors of the hydraulic driven work units (2, 2', 5) are arranged to be reversable as to release a blockage.

**Patentansprüche**

1. Steinsammler (1), der mit einem landwirtschaftlichen Traktor oder Äquivalentem verbunden ist,

wobei der Steinsammler mehrere hydraulisch angetriebene Arbeitseinheiten (2, 2', 5) umfasst: eine linke Recheneinheit (2), eine rechte Recheneinheit (2') und einen Hubrotor (5), und
Hydraulikmotoren (3, 3', 6, 6'), die die Arbeitseinheiten antreiben,
**dadurch gekennzeichnet, dass**
die Hydraulikmotoren (6, 6') angeordnet sind, den Hubrotor (5) anzutreiben, und
die Hydraulikmotoren (3, 3') angeordnet sind, die Recheneinheiten (2, 2') anzutreiben, und
jeder der Hydraulikmotoren (3, 3') mit einem Hydraulikmotor (6, 6') des Hubrotors (5) in Reihe verbunden ist,
die Hydraulikmotoren des Hubrotors auch angeordnet sind, als Pumpen zu fungieren, wodurch
kinetische Energie, die im Hubrotor gespeichert ist, zusammen mit überschüssiger Hydraulikleistung von den Motoren (6, 6') des Hubrotors (5) angeordnet ist, dem Motor (3 oder 3') einer momentan am stärksten belasteten Recheneinheit (2, 2') zuführbar zu sein, um den Motor (3, 3') davon bei Lastschwankungen zu unterstützen, und wodurch sie angeordnet ist, einen Hydraulikgesamtleistungsbedarf des Steinsammlers zu minimieren.

2.	Steinsammler (1) nach dem vorhergehenden Anspruch, **dadurch gekennzeichnet, dass** mindestens drei der Hydraulikmotoren (3, 3', 6, 6') angeordnet sind, ihre spezifischen Drehgeschwindigkeiten im Wesentlichen auch zu halten, wenn die Lastverteilung zwischen den angetriebenen Arbeitseinheiten (2, 2', 5) willkürlich variiert.

3.	Steinsammler (1) nach einem der vorhergehenden Ansprüche, **dadurch gekennzeichnet, dass** eine Leistungsverteilung zwischen den Hydraulikmotoren (3, 3', 6, 6') derart angeordnet ist, dass die maximale Leistung dem Hydraulikmotor zugeführt wird, der momentan die höchste externe Last aufweist.

4.	Steinsammler (1) nach einem der vorhergehenden Ansprüche, **dadurch gekennzeichnet, dass** die Hydraulikmotoren (6, 6'), die dieselbe Arbeitseinheit (5) antreiben, entweder auf der Druck- oder der Rücklaufseite parallel verbunden sind.

5.	Steinsammler (1) nach einem der vorhergehenden Ansprüche, **dadurch gekennzeichnet, dass** Rotoren der hydraulisch angetriebenen Arbeitseinheiten (2, 2', 5) angeordnet sind, umkehrbar zu sein, um eine Verstopfung freizugeben.

**Revendications**

1.	Ramasseur de pierres (1) raccordé à un tracteur agricole ou équivalent,
le ramasseur de pierres comprenant plusieurs unités de travail entraînées par voie hydraulique (2, 2', 5) : une unité de râteau gauche (2), une unité de râteau droite (2') et un rotor de levage (5), et
des moteurs hydrauliques (3, 3', 6, 6') entraînant lesdites unités de travail,
**caractérisé en ce que** :

les moteurs hydrauliques (6, 6') sont agencés pour entraîner le rotor de levage (5), et
les moteurs hydrauliques (3, 3') sont agencés pour entraîner les unités de râteau (2, 2'), et
chacun des moteurs hydrauliques (3, 3') est raccordé en série avec un moteur hydraulique (6, 6') du rotor de levage (5),
lesdits moteurs hydrauliques du rotor de levage étant également agencés pour servir de pompes, moyennant quoi :
l'énergie cinétique stockée dans le rotor de levage conjointement avec l'énergie hydraulique en surplus provenant des moteurs (6, 6') du rotor de levage (5), est agencée pour pouvoir être fournie au moteur (3 ou 3') d'une unité de râteau la plus chargée instantanée (2, 2') pour assister son moteur (3, 3') lors de ses fluctuations de charge, et étant ainsi agencée pour minimiser une demande d'énergie hydraulique totale du ramasseur de pierres.

2.	Ramasseur de pierres (1) selon la revendication précédente, **caractérisé en ce qu'**au moins trois des rotors hydrauliques (3, 3', 6, 6') sont agencés pour maintenir principalement leurs vitesses de rotation spécifiques également lorsque la distribution de charge entre les unités de travail entraînées (2, 2', 5) varie de manière arbitraire.

3.	Ramasseur de pierres (1) selon l'une quelconque des revendications précédentes, **caractérisé en ce qu'**une distribution de puissance entre les moteurs hydrauliques (3, 3', 6, 6') est agencée de sorte que la puissance maximum est fournie à ce moteur hydraulique qui a instantanément la charge externe la plus élevée.

4. Ramasseur de pierres (1) selon l'une quelconque des revendications précédentes, **caractérisé en ce que** les moteurs hydrauliques (6, 6') qui entraînent la même unité de travail (5), sont raccordés en parallèle du côté de la pression ou du retour.

5. Ramasseur de pierres (1) selon l'une quelconque des revendications précédentes, **caractérisé en ce que** les rotors des unités de travail entraînées par voie hydraulique (2, 2', 5) sont agencés pour être réversibles afin de libérer un blocage.

Fig 1

Fig 2

13

13´

Fig 3

Fig 4

## REFERENCES CITED IN THE DESCRIPTION

### Patent documents cited in the description

- FR 2595185
- CS 263662